# EUROPEAN PATENT SPECIFICATION

(11) **EP 4 645 650 B1**
(45) Date of publication and mention of the grant of the patent: **11.11.2026**
(21) Application number: 25172523.0
(22) Date of filing: 25.04.2025
(51) Int. Cl.: H02J 13/00, H04B 3/54, H02J 13/12, H02J 13/13

(54) **METHOD AND APPARATUS FOR CONTROLLING COMMUNICATION SIGNAL OF PHOTOVOLTAIC POWER GENERATION SYSTEM**
VERFAHREN UND VORRICHTUNG ZUR STEUERUNG EINES KOMMUNIKATIONSSIGNALS EINES FOTOVOLTAISCHEN STROMERZEUGUNGSSYSTEMS
PROCÉDÉ ET APPAREIL DE COMMANDE DE SIGNAL DE COMMUNICATION D'UN SYSTÈME DE PRODUCTION D'ÉNERGIE PHOTOVOLTAÏQUE

(30) Priority: 30.04.2024 KR 20240057640
(43) Date of publication of application: 05.11.2025
(73) Proprietor: Hanwha Solutions Corporation, Jung-gu Seoul 04541 (KR)
(72) Inventor: KIM, Mi So, 04541 Seoul (KR); LEE, Jae Dong, 04541 Seoul (KR); LEE, Su Chang, 04541 Seoul (KR); YUN, Ju Hwan, 04541 Seoul (KR); SHIN, Seung Woo, 04541 Seoul (KR); WOO, Jeong Hun, 04541 Seoul (KR)
(74) Representative: Mooser, Sebastian Thomas

(56) References cited:
- KR-A- 20150 077 889
- US-A1- 2015 222 227
- US-A1- 2019 115 868
- US-A1- 2022 393 642
- JIANMING LIU ET AL: "Application of power line communication in smart power Consumption", POWER LINE COMMUNICATIONS AND ITS APPLICATIONS (ISPLC), 2010 IEEE INTERNATIONAL SYMPOSIUM ON, IEEE, PISCATAWAY, NJ, USA, 28 March 2010 (2010-03-28), pages 303 - 307, XP031686477, ISBN: 978-1-4244-5009-1

## Description

### BACKGROUND

### 1. Field

One or more embodiments relate to a method and apparatus for controlling a communication signal of a photovoltaic power generation system.

### 2. Description of the Related Art

Recently, as interest in eco-friendly energy technology grows, the number of photovoltaic power generation systems is also rising. Prior art can be found, e.g., in US 2019/115868 A1, which generally relates to a photovoltaic module, a photovoltaic system and a method of operating a photovoltaic system.

To remotely check information about a photovoltaic power generation system, a separate communication device, such as a mobile device, must be used. In case that there is a problem with the connection between the separate communication device and the photovoltaic power generation system, it is very difficult to determine an operating status of a device included in the photovoltaic power generation system.

In case that devices included in a photovoltaic power generation system are connected through power line communication, it causes inconvenience in that an expert must go to an installation site of a device, with which a communication problem has occurred, to inspect the device.

The disclosure is intended to acquire various information about a photovoltaic power generation system without having to go to an installation site of photovoltaic power generation system facilities, and to immediately respond to a communication fault, in case that such a communication fault occurs in the photovoltaic power generation system, by controlling a communication signal based on a user's operation or various data of the photovoltaic power generation system.

### SUMMARY

The invention is set out in the appended claims.

One or more embodiments provide a method and apparatus for controlling a communication signal of a photovoltaic power generation system. One or more embodiments relate to a computer-readable recording medium in which a program for executing the method on a computer is recorded. However, embodiments of the disclosure are not restricted to the one set forth herein, and other embodiments of the disclosure may exist.

Aspects of the invention are disclosed in independent claims 1, 8 and 9.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a diagram of an example of a method for controlling a communication signal of a photovoltaic power generation system according to an embodiment;
FIG. 2 is a schematic diagram of an example of an apparatus for controlling a communication signal of a photovoltaic power generation system according to an embodiment;
FIG. 3 is a flowchart of an example of a method for controlling a communication signal of a photovoltaic power generation system according to an embodiment;
FIG. 4 is a diagram of an example of acquiring data on a communication status by monitoring a plurality of devices according to an embodiment;
FIG. 5 is a flowchart of an example of a method for controlling a communication signal according to an embodiment;
FIG. 6 is a diagram of an example of a method for outputting acquired data, data on operating statuses of devices, and information related to communication in real time according to an embodiment; and
FIG. 7 is a diagram of another example of a method for outputting acquired data, data on operating statuses of devices, and information related to communication in real time according to an embodiment.

### DETAILED DESCRIPTION

Terms used in the embodiments of the disclosure may be selected from general terms that are currently widely used, but may vary depending on the intention of engineers who work in the field, precedents, the emergence of new technologies, and the like. In a certain case, there may be terms arbitrarily selected by the applicant, and in this case, the meaning will be described in detail in the description of a relevant embodiment. Therefore, the term used in this specification should be defined by the meaning of the term and the overall context of the disclosure, rather than merely by the name of the term.

Throughout the disclosure, in case that a part "includes" a component, it means that other components may be further included, rather than excluding the other components, unless otherwise specified. Terms, such as "unit" and "module" described herein may refer to a unit that processes at least one function or operation, and may be implemented as hardware or software, or as a combination of hardware and software.

Terms including ordinal numbers, such as "first" or "second," used herein may be used to describe various components, but the components should not be limited by the terms. The terms may be used to distinguish one component from another.

Hereinafter, the disclosure will be described in detail with reference to the accompanying drawings. However, the disclosure may be implemented in various different forms and is not limited to the embodiment described herein.

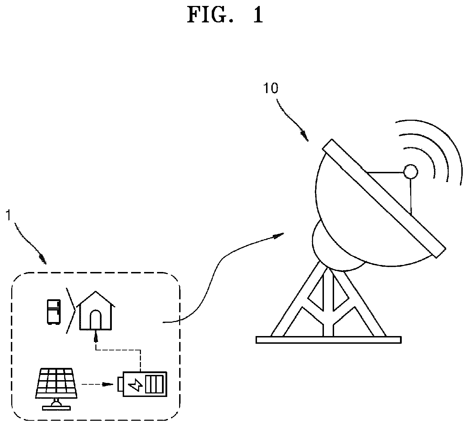

FIG. 1 is a diagram of an example of a method for controlling a communication signal of a photovoltaic power generation system according to an embodiment.

Referring to FIG. 1, a plurality of devices included in a photovoltaic power generation system 1 may perform communication 10 in various ways.

For example, devices included in the photovoltaic power generation system 1 may perform communication 10 by a power line communication method or a radio frequency method.

In some embodiments, a gateway device and at least one module level power electronics (MLPE) included in the photovoltaic power generation system 1 may perform communication 10 through the power line communication or the radio frequency. Here, a gateway may refer to a communication device that collects information related to hardware devices connected to a photovoltaic power generation system and transmits the collected information to the Internet and/or a cloud, and may refer to a device that enables an MLPE and devices inside the photovoltaic power generation system to communicate with the web or an application. An MLPE may be a device that converts power in module units, and may include micro inverters and direct current (DC) optimizers (DO).

However, the power line communication method may result in bad communication 10 in case that significant noise is generated by other electronic devices using the same power line communication network or drastic frequency attenuation takes place. The radio frequency method may result in bad communication 10 in case that there are obstacles causing interference or there are devices utilizing the same public frequency band.

Accordingly, a user may be provided with information related to a communication status of the photovoltaic power generation system 1 that is continuously monitored, and information related to a communication signal controlled according to the communication status.

In some embodiments, the disclosure provides only an example in which the photovoltaic power generation system 1 uses the power line communication method, but may also be applied equally or similarly to an example of using the radio frequency method.

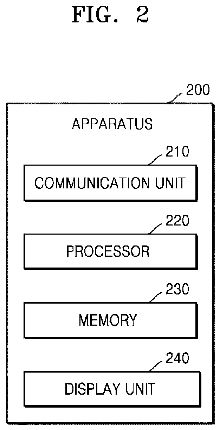

FIG. 2 is a schematic diagram of an example of an apparatus for controlling a communication signal of a photovoltaic power generation system according to an embodiment.

Referring to FIG. 2, an apparatus 200 for controlling a communication signal of a photovoltaic power generation system (hereinafter, referred to as an 'apparatus 200') may include a communication unit 210, a processor 220, a memory 230, and a display unit 240. Only components related to an embodiment are illustrated in the apparatus 200 of FIG. 2. Therefore, it may be apparent to a person skilled in the art that other general components may be included in addition to the components illustrated in FIG. 2.

For example, the apparatus 200 may refer to one of a plurality of devices included in the photovoltaic power generation system or may be a separate device that is not included in the photovoltaic power generation system.

The apparatus 200 may also refer to a partial configuration of any device included in the photovoltaic power generation system. In some embodiments, the apparatus 200 may refer to a partial configuration of a gateway included in the photovoltaic power generation system.

The communication unit 210 may include at least one component that allows wired/wireless communication with an external server or external device. For example, the communication unit 210 may include a short-range communication unit (not shown) and a mobile communication unit (not shown) for communication with the external server or external device.

The processor 220 may control an overall operation of the apparatus 200. For example, the processor 220 may generally control an input unit (not shown), a display (not shown), the communication unit 210, the memory 230, and the like by executing programs stored in the memory 230.

The processor 220 may be implemented using at least one of application specific integrated circuits (ASICs), digital signal processors (DSPs), digital signal processing devices (DSPDs), programmable logic devices (PLDs), field programmable gate arrays (FPGAs), controllers, micro-controllers, microprocessors, and other electrical units for performing functions.

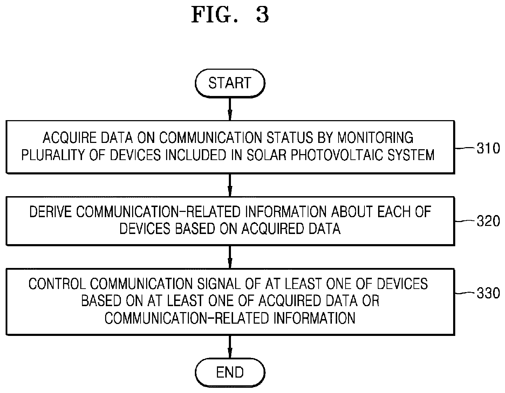

The processor 220 may control an operation of the apparatus 200 by executing programs stored in the memory 230. As an example, the processor 220 may perform at least some processes of a method for controlling a communication signal of a photovoltaic power generation system, which will be described with reference to FIGS. 3 to 7.

The memory 230 may be a hardware component that stores various data processed in the apparatus 200 and may store programs for processing and controlling the processor 220.

For example, the memory 230 may store various data, for example, power information, which includes power generation, atmospheric temperature, current power, a predicted power consumption, stored power, mobile power, and consumed power, weather information, such as wind speed, rainfall, snowfall, and sunrise/sunset time, signal strength according to power line communication or radio communication (radio frequency), a noise value included in a signal according to power line communication or radio communication, a signal to noise ratio (SNR) value, an LQI value (a communication quality value), the number of attempts to transmit signals through power line communication, the number of receptions of signals through power line communication, a communication success rate, a grid frequency, temperature of a device, an error value of a device, a notification display value, and data generated according to the operation of the processor 220. The memory 230 may store an operating system (OS) and at least one program (e.g., a program required for the operation of the processor 220).

The memory 230 may include random access memory (RAM), such as dynamic random access memory (DRAM), and static random access memory (SRAM), read-only memory (ROM), electrically erasable programmable read-only memory (EEPROM), CD-ROM, Blu-ray or other optical disk storage, hard disk drive (HDD), solid state drive (SSD), or a flash memory.

The display unit 240 may be a hardware component that displays various data processed in the apparatus 200.

For example, the display unit 240 may include a smartphone, a tablet PC, a PC, a smart TV, a media player, a navigation, a kiosk, a wearable device, and the like.

Accordingly, the display unit 240 may provide the user with information related to the communication status of the photovoltaic power generation system, information related to the MLPE, and the like.

FIG. 3 is a flowchart of an example of a method for controlling a communication signal of a photovoltaic power generation system according to an embodiment.

Referring to FIG. 3, a method for controlling a communication signal of a photovoltaic power generation system may include steps 310 to 330. However, the disclosure is not limited thereto, and other general steps may be further included, in addition to the steps illustrated in FIG. 3, in the method for controlling the communication signal of the photovoltaic power generation system. As illustrated with reference to FIGS. 1 and 2, at least one of the steps of the flowchart illustrated in FIG. 3 may be processed by the processor 220.

In step 310, the processor 220 may acquire data on the communication status by monitoring a plurality of devices included in the photovoltaic power generation system.

For example, the processor 220 may acquire data on the communication status by monitoring a communication status between devices connected through power line communication.

In step 320, the processor 220 may derive information related to communication of each of the devices based on the acquired data.

For example, the processor 220 may derive a signal to noise ratio (SNR) value based on strength of a power line communication signal and a level of noise included in the power line communication signal that are included in the acquired data.

In step 330, the processor 220 may control the communication signal of at least one of the devices based on one of the acquired data or the information related to the communication.

For example, the processor 220 may control a power line communication signal of at least one of the devices by detecting a collision between a power line communication signal of each of the devices and a power line communication signal of any other device other than the devices. In another example, the processor 220 may control a power line communication signal of at least one of the devices based on strength of a power line communication signal or a level of noise included in the power line communication signal that are included in the acquired data.

For example, the processor 220 may control a communication signal of at least one of the devices based on an SNR value included in the information related to the communication. The processor 220 may derive an SNR value at preset time intervals based on the strength of the power line communication signal and the level of noise included in the power line communication signal that are included in the acquired data, and change strength of a communication signal of at least one of the devices based on the SNR value.

As another example, the processor 220 may output the acquired data, the data on the operating status of the devices, and the information related to the communication in real time.

The processor 220 may provide a user with an alarm indicating a result of controlling the communication signal.

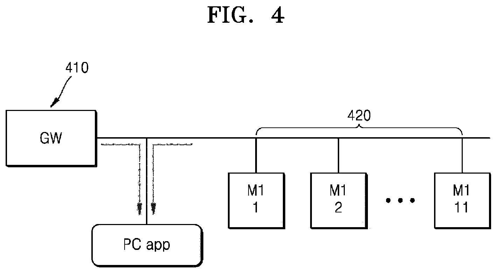

FIG. 4 is a diagram of an example of acquiring data on a communication status by monitoring a plurality of devices according to an embodiment.

Hereinafter, a description will be given of an example in which the processor 220 acquires data on a communication status from a plurality of devices, with reference to FIG. 4.

Referring to FIG. 4, the processor 220 may monitor at least one module level power electronics (MLPE) 420 connected to a gateway 410.

For example, the processor 220 may acquire data on a communication status by monitoring the plurality of devices included in the photovoltaic power generation system. In some examples, the processor 220 may acquire data regarding the communication status by monitoring a communication status between devices, which are connected through power line communication.

In some embodiments, the processor 220 may acquire monitoring data on each of a plurality of MLPEs 420 which are connected to the gateway 410 through power line communication. Here, the monitoring data may include strength of a signal according to a power line communication method, a level of noise included in the signal according to the power line communication method, a grid frequency, a communication quality value (LQI value), an error value, a notification display value, an alternating-current (AC) voltage, an AC current, a direct-current (DC) voltage, a DC current, power generation, accumulated power generation, and temperature of each of the plurality of MLPEs 420 connected to the gateway 410, and the number of attempts for communication, the number of communication successes, and a communication success rate between the gateway 410 and the MLPE 420.

For example, the processor 220 may acquire data on a level of temporary noise generated from lighting, home appliances, and the like, or data on a level of periodic noise generated from refrigerators, motors, and the like.

The processor 220 may output the acquired data in real time. Therefore, the user may check the data output in real time.

For example, the processor 220 may derive information related to communication of each of the devices based on the acquired data. In another example, the processor 220 may derive a signal to noise ratio (SNR) value based on strength of a power line communication signal and a level of noise included in the power line communication signal that are included in the acquired data. Here, SNR may refer to a signal-to-noise ratio, and may refer to a ratio of strength of a power line communication signal to a level of noise included in the power line communication signal.

For example, the processor 220 may derive an SNR value by acquiring strength of a power line communication signal and a level of noise included in the power line communication signal at a first time interval. The processor 220 may output the strength of the power line communication signal and the level of noise included in the power line communication signal, which are acquired at the first time interval, and the derived SNR value in real time. Therefore, the user may check information related to communication output in real time.

The processor 220 controls a communication signal of at least one of the devices based on one of acquired data or communication-related information.

In case that data or communication-related information indicating a bad power line communication status, the processor 220 controls a communication signal of at least one device with the bad power line communication status.

The processor 220 may amplifies strength of a communication signal which is generated from a device with which power line communication is in a bad status. In another example, the processor 220 may amplify strength of an already generated communication signal. As another example, the processor 220 may generate a communication signal of a device in a bad power line communication status by amplifying strength of the communication signal. For example, the processor 220 may generate a communication signal with amplified strength.

For example, in the disclosure, controlling a communication signal may refer to both amplifying strength of a generated communication signal and generating a communication signal with amplified strength.

For example, the processor 220 may control a communication signal of a device even in case that a power line communication status is good. In another example, in case that a power line communication status is good, the processor 220 may reduce strength of a communication signal, which has strong strength, to optimal strength. Accordingly, the processor 220 may generate a communication signal with reduced strength or reduce the strength of a generated communication signal.

The processor 220 may construct a database using data resulting from controlling the strength of the communication signal. Therefore, in case of controlling a communication signal, the processor 220 may adjust strength of the communication signal to optimized strength by using the data stored in the constructed database.

In some embodiments, the processor 220 may determine that a power line communication status of at least one of the devices is bad based on one of the acquired data or the communication-related information.

For example, the processor 220 may control a communication signal of at least one of the devices based on strength of a power line communication signal or a level of noise included in the power line communication signal that are included in the acquired data.

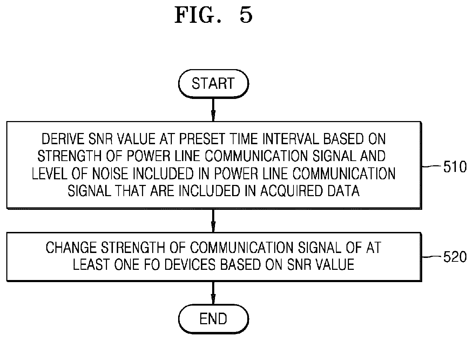

FIG. 5 is a flowchart of an example of a method for determining a bad or good power line communication status according to an embodiment.

Hereinafter, an example of a method by which the processor 220 determines that a power line communication status is bad will be described with reference to FIG. 5.

Referring to FIG. 5, in step 510, the processor 220 may derive an SNR value at preset time intervals based on strength of a power line communication signal and a level of noise included in the power line communication signal that are included in the acquired data. Here, the preset time interval may be a second time interval.

For example, the processor 220 may derive an SNR value at the second time interval based on the strength of the power line communication signal and the level of noise included in the power line communication signal that are included in the acquired data. Here, the second time interval may be a shorter time interval than the first time interval described above.

Accordingly, the processor 220 may derive the SNR value at the first time interval or the second time interval by using the strength data of the power line communication signal and the level data of the noise included in the power line communication signal, which are continuously acquired. The processor 220 may also derive the SNR value by using the strength data of the power line communication signal and the level data of the noise included in the power line communication signal, which are acquired at the first time interval or the second time interval.

In step 520, the processor 220 may change the strength of the communication signal of at least one of the devices based on the SNR value.

For example, the processor 220 may change strength of a communication signal of a device, which is determined to be in a bad power line communication status, among the devices, based on the SNR value derived at the second time interval.

In some embodiments, the processor 220 may control a communication signal of at least one of the devices based on the SNR value included in the communication related-information. In another example, the processor 220 may control the communication signal of the device based on the SNR value derived at the first time interval described above.

For example, the processor 220 may adjust the strength of the communication signal of the device based on the SNR value derived at the first time interval or the second time interval.

For example, the processor 220 may calculate an SNR average value for 3 minutes, 5 minutes, 30 minutes, or 60 minutes, and in case that the calculated SNR average value is out of a preset range, may adjust the strength of the communication signal of the device so that the SNR average value falls within the preset range. Here, the preset range may be 8 decibel (dB) to 12 dB, but is not limited thereto, and may change according to user input.

For example, in case that the calculated SNR average value is out of the preset range, the user may directly adjust the strength of the communication signal of the device so that the SNR average value falls within the preset range. As an example, the user may input a range for controlling the strength of the communication signal. As another example, the user may manually adjust the strength of the communication signal by directly inputting the strength of the communication signal to change.

As described above, in case that the user directly adjusts the strength of the communication signal, the user may adjust the strength of the communication signal using the display unit 240 described with reference to FIG. 2, but is not limited thereto. In another example, the user may also adjust the strength of the communication signal by using a separate interface (user interface or/and user experience) which is provided via the web or application.

For example, the processor 220 may control a power line communication signal of at least one of devices by detecting a collision between a power line communication signal of each of the devices and a power line communication signal of any other device other than the devices. In another example, the power line communication method is a communication method that utilizes already installed power lines, and any other device, other than the devices included in the photovoltaic power generation system, may also utilize the same power lines as the devices included in the photovoltaic power generation system.

For example, the processor 220 may detect a signal collision with any other device that uses the same power lines as a device included in the photovoltaic power generation system.

Accordingly, in case that the processor 220 detects a signal collision with the other device, the processor 220 may adjust the strength of the communication signal of the device included in the photovoltaic power generation system.

The processor 220 may provide a user with an alarm indicating a result of controlling a communication signal.

For example, the processor 220 may provide the user with the result of controlling the communication signal by amplifying or reducing the strength of the communication signal.

Therefore, the user may take additional actions upon receiving an alarm indicating that the power line communication status is bad, even in case that the strength of the communication signal is amplified through the control of the communication signal.

As another example, the processor 220 may output the acquired data, the data on the operating status of the devices, and the communication-related information in real time.

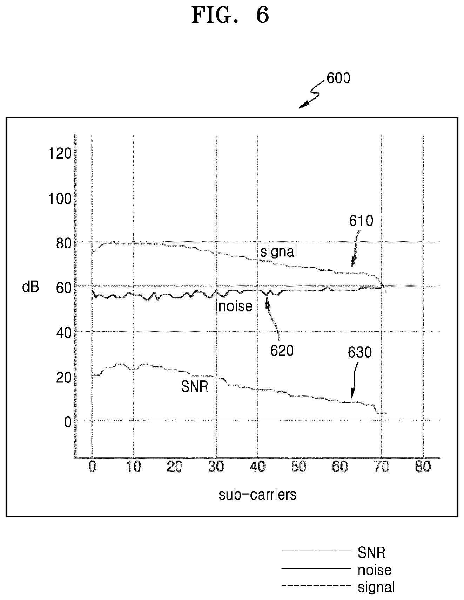

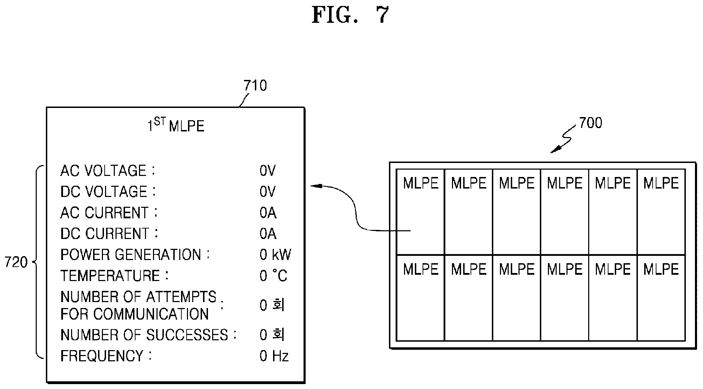

FIG. 6 is a diagram of an example of a method for outputting acquired data, data on operating statuses of devices, and communication-related information in real time according to an embodiment. FIG. 7 is a diagram of another example of a method for outputting acquired data, data on operating statuses of devices, and communication-related information in real time according to an embodiment.

Hereinafter, examples in which the processor 220 outputs acquired data, data on an operating status of devices, and communication-related information in real time will be described with reference to FIGS. 6 and 7.

First, referring to FIG. 6, the processor 220 may output acquired data and communication-related information in real time.

For example, the processor 220 may output a graph in real time to show strength 610 of a power line communication signal in acquired data, a level 620 of noise included in the power line communication signal, and an SNR value 630 in communication-related information.

Although not illustrated, the processor 220 may output numerical values in real time to indicate the strength 610 of the power line communication signal as the acquired data, the level 620 of noise included in the power line communication signal, and the SNR value 630 as the communication-related information.

For example, the processor 220 may output in real time the strength 610 of the power line communication signal, the level 620 of noise included in the power line communication signal, and the SNR value 630 for a gateway or each of at least one MLPE included in the photovoltaic power generation system, and provide the same to the user.

Referring to FIG. 7, the processor 220 may output data 720 on the operating status of each of all MLPEs connected to the gateway in real time.

For example, the processor 220 may output the data 720 on the operating status of each of all MLPEs connected to the gateway in real time on a single screen 700.

For example, the processor 220 may output in real time only data 720 on the operating status of any one 710 of the MLPEs connected to the gateway.

Here, the data 720 on the operating status is not limited to the data shown, and may further include an SNR value, an LQI value (an SNR average value or a communication quality value), accumulated power generation, a communication success rate, an atmospheric temperature, an error value, a notification display value, and the like.

In some embodiments, the above-described method may be written as a program that may be executable on a computer, and may be implemented in a general-purpose digital computer that activates the program using a computer-readable recording medium. The structure of data used in the method described above may be recorded on the computer-readable recording medium through various methods. The computer-readable recording medium may include storage media, such as magnetic storage media (e.g., ROM, RAM, USB, floppy disk, hard disk, and the like) and optical readable media (e.g., CD-ROM, DVD, and the like).

Information related to a communication signal used in a photovoltaic power generation system may be provided to a user.

In case that an error occurs in a communication system, the error may be resolved by adjusting strength of a communication signal without a user's manipulation.

In case that the error is not resolved even by adjusting the strength of the communication signal, an alarm may be output to the user.

The user may easily manage various devices included in the photovoltaic power generation system, in response to a real-time situation of the photovoltaic power generation system.

The user may be provided with a screen that displays whether there is a fault in a device included in the photovoltaic power generation system, which may enable the user to quickly and effectively respond to the fault of the device.

However, the effects of the embodiments are not limited to the effects mentioned above, and other effects not mentioned may be clearly understood by a person skilled in the art from the description of the disclosure.

It will be understood by a person skilled in the art to which the disclosure pertains that the disclosure may be implemented in modified forms without departing from the essential features of the disclosure. Therefore, the disclosed methods should be considered in an illustrative sense rather than a restrictive sense, and the claims, not the foregoing description, should be interpreted to include all differences falling within the equivalent range thereto.

## Claims

1. A method for controlling a communication signal of a photovoltaic power generation system, the method comprising:
acquiring (310) data on a communication status by monitoring a plurality of devices included in the photovoltaic power generation system;
deriving (320) information related to communication of each of the devices based on the acquired data; and
controlling (330) a communication signal of at least one of the devices based on one of the acquired data or the information related to the communication
wherein the controlling further comprises deriving at least one device with a bad power line communication status based on the acquired data; and controlling a strength of communication signal of the at least one device with the bad power line communication status so that the strength of communication signal is amplified.

2. The method of claim 1, wherein
the acquiring comprises acquiring the data on the communication status by monitoring the communication status among the devices connected by a power line communication method.

3. The method of claim 1, wherein
the deriving comprises deriving a signal to noise ratio (SNR) value based on a strength of a power line communication signal and a level of noise included in the power line communication signal that are included in the acquired data.

4. The method of claim 1, wherein
the controlling comprises controlling the communication signal of the at least one of the devices based on a strength of a power line communication signal or a level of noise included in the power line communication signal that are included in the acquired data.

5. The method of claim 1, wherein
the controlling comprises:
deriving an SNR value at preset time intervals based on a strength of a power line communication signal and a level of noise included in the power line communication signal that are included in the acquired data; and
changing a strength of the communication signal of the at least one of the devices based on the SNR value.

6. The method of claim 1, wherein
the controlling comprises controlling the communication signal of the at least one of the devices based on an SNR value included in the information related to the communication.

7. The method of claim 1, wherein
the controlling comprises controlling a power line communication signal of at least one of the devices by detecting a collision between a power line communication signal of each of the devices and a power line communication signal of any other device, other than the devices.

8. A computer-readable recording medium recorded thereon a program for causing a computer to execute the method of claim 1.

9. An apparatus (200) for controlling a communication signal of a photovoltaic power generation system, the apparatus (200) comprising:
a memory (230) storing at least one program therein; and
at least one processor (220) configured to execute the at least one program,
wherein the at least one processor (220) is further configured to acquire data on a communication status by monitoring a plurality of devices included in the photovoltaic power generation system,
derive information related to communication of each of the devices based on the acquired data, and
control a communication signal of at least one of the devices based on one of the acquired data or the information related to the communication
wherein the at least one processor (220) is further configured to derive at least one device with a bad power line communication status based on the acquired data; and to control a strength of communication signal of the at least one device with the bad power line communication status so that the strength of communication signal is amplified.

10. The apparatus (200) of claim 9, wherein
the at least one processor (220) is further configured to acquire the acquired data by monitoring a communication status among the devices connected by a power line communication method.

11. The apparatus (200) of claim 9, wherein
the at least one processor (220) is further configured to derive a signal to noise ratio (SNR) value based on a strength of a power line communication signal and a level of noise included in the power line communication signal that are included in the acquired data.

12. The apparatus (200) of claim 9, wherein
the at least one processor (220) is further configured to control the communication signal of the at least one of the devices based on a strength of a power line communication signal or a level of noise included in the power line communication signal that are included in the acquired data.

13. The apparatus (200) of claim 9, wherein
the at least one processor (220) is further configured to derive an SNR value at preset time intervals based on a strength of a power line communication signal and a level of noise included in the power line communication signal that are included in the acquired data, and
change a strength of the communication signal of the at least one of the devices based on the SNR value.

14. The apparatus (200) of claim 9, wherein
the at least one processor (220) is further configured to control the communication signal of the at least one of the devices based on an SNR value included in the information related to the communication.

15. The apparatus (200) of claim 9, wherein
the at least one processor (220) is further configured to control a power line communication signal of at least one of the devices by detecting a collision between a power line communication signal of each of the devices and a power line communication signal of any other device, other than the devices.

## Patentansprüche

1. Verfahren zum Steuern eines Kommunikationssignals eines Photovoltaik-Stromerzeugungssystems, wobei das Verfahren umfasst:
Erfassen (310) von Daten über einen Kommunikationsstatus durch Überwachen einer Mehrzahl von in dem Photovoltaik-Stromerzeugungssystem enthaltenen Vorrichtungen;
Ableiten (320) von Informationen bezüglich einer Kommunikation jeder der Vorrichtungen auf Grundlage der erfassten Daten; und
Steuern (330) eines Kommunikationssignals von mindestens einer der Vorrichtungen auf Grundlage entweder der erfassten Daten oder der Informationen bezüglich der Kommunikation,
wobei das Steuern ferner umfasst: Ableiten mindestens einer Vorrichtung mit einem schlechten Powerline-Kommunikationsstatus auf Grundlage der erfassten Daten; und Steuern einer Stärke des Kommunikationssignals der mindestens einen Vorrichtung mit dem schlechten Powerline-Kommunikationsstatus derart, dass die Stärke des Kommunikationssignals verstärkt wird.

2. Verfahren nach Anspruch 1, wobei
das Erfassen ein Erfassen der Daten über den Kommunikationsstatus durch Überwachen des Kommunikationsstatus zwischen den Vorrichtungen umfasst, die durch ein Powerline-Kommunikationsverfahren miteinander verbunden sind.

3. Verfahren nach Anspruch 1, wobei
das Ableiten ein Ableiten eines Signal-Rausch-Verhältnis-(SNR-)Werts auf Grundlage einer Stärke eines Powerline-Kommunikationssignals und eines Pegels eines in dem Powerline-Kommunikationssignal enthaltenen Rauschens umfasst, die in den erfassten Daten enthalten sind.

4. Verfahren nach Anspruch 1, wobei
das Steuern ein Steuern des Kommunikationssignals der mindestens einen der Vorrichtungen auf Grundlage einer Stärke eines Powerline-Kommunikationssignals oder eines Pegels eines in dem Powerline-Kommunikationssignal enthaltenen Rauschens umfasst, die in den erfassten Daten enthalten sind.

5. Verfahren nach Anspruch 1, wobei
das Steuern umfasst:
Ableiten eines SNR-Werts in vorgegebenen Zeitintervallen auf Grundlage einer Stärke eines Powerline-Kommunikationssignals und eines Pegels eines in dem Powerline-Kommunikationssignal enthaltenen Rauschens, die in den erfassten Daten enthalten sind; und
Ändern einer Stärke des Kommunikationssignals der mindestens einen der Vorrichtungen auf Grundlage des SNR-Werts.

6. Verfahren nach Anspruch 1, wobei
das Steuern ein Steuern des Kommunikationssignals der mindestens einen der Vorrichtungen auf Grundlage eines in den Informationen bezüglich der Kommunikation enthaltenen SNR-Werts umfasst.

7. Verfahren nach Anspruch 1, wobei
das Steuern ein Steuern eines Powerline-Kommunikationssignals von mindestens einer der Vorrichtungen durch Erfassen einer Kollision zwischen einem Powerline-Kommunikationssignal jeder der Vorrichtungen und einem Powerline-Kommunikationssignal irgendeiner anderen Vorrichtung, bei der es sich nicht um die Vorrichtungen handelt, umfasst.

8. Computerlesbares Aufzeichnungsmedium, auf dem ein Programm aufgezeichnet ist, das einen Computer veranlasst, das Verfahren nach Anspruch 1 auszuführen.

9. Vorrichtung (200) zum Steuern eines Kommunikationssignals eines Photovoltaik-Stromerzeugungssystems, wobei die Vorrichtung (200) umfasst:
einen Speicher (230), in dem mindestens ein Programm gespeichert ist; und
mindestens einen Prozessor (220), der dazu eingerichtet ist, das mindestens eine Programm auszuführen,
wobei der mindestens eine Prozessor (220) ferner dazu eingerichtet ist,
Daten über einen Kommunikationsstatus durch Überwachen einer Mehrzahl von in dem Photovoltaik-Stromerzeugungssystem enthaltenen Vorrichtungen zu erfassen,
Informationen bezüglich der Kommunikation jeder der Vorrichtungen auf Grundlage der erfassten Daten abzuleiten, und
ein Kommunikationssignal von mindestens einer der Vorrichtungen auf Grundlage entweder der erfassten Daten oder der Informationen bezüglich der Kommunikation zu steuern,
wobei der mindestens eine Prozessor (220) ferner dazu eingerichtet ist,
mindestens eine Vorrichtung mit einem schlechten Powerline-Kommunikationsstatus auf Grundlage der erfassten Daten abzuleiten; und
eine Stärke des Kommunikationssignals der mindestens einen Vorrichtung mit dem schlechten Powerline-Kommunikationsstatus derart zu steuern, dass die Stärke des Kommunikationssignals verstärkt wird.

10. Vorrichtung (200) nach Anspruch 9, wobei
der mindestens eine Prozessor (220) ferner dazu eingerichtet ist, die erfassten Daten durch Überwachen eines Kommunikationsstatus zwischen den Vorrichtungen zu erfassen, die durch ein Powerline-Kommunikationsverfahren miteinander verbunden sind.

11. Vorrichtung (200) nach Anspruch 9, wobei
der mindestens eine Prozessor (220) ferner dazu eingerichtet ist, einen Signal-Rausch-Verhältnis-(SNR-)Wert auf Grundlage einer Stärke eines Powerline-Kommunikationssignals und eines Pegels eines in dem Powerline-Kommunikationssignal enthaltenen Rauschens abzuleiten, die in den erfassten Daten enthalten sind.

12. Vorrichtung (200) nach Anspruch 9, wobei
der mindestens eine Prozessor (220) ferner dazu eingerichtet ist, das Kommunikationssignal der mindestens einen der Vorrichtungen auf Grundlage einer Stärke eines Powerline-Kommunikationssignals oder eines Pegels eines in dem Powerline-Kommunikationssignal enthaltenen Rauschens zu steuern, die in den erfassten Daten enthalten sind.

13. Vorrichtung (200) nach Anspruch 9, wobei
der mindestens eine Prozessor (220) ferner dazu eingerichtet ist, einen SNR-Wert in vorgegebenen Zeitintervallen auf Grundlage einer Stärke eines Powerline-Kommunikationssignals und eines Pegels eines in dem Powerline-Kommunikationssignal enthaltenen Rauschens abzuleiten, die in den erfassten Daten enthalten sind, und
eine Stärke des Kommunikationssignals der mindestens einen der Vorrichtungen auf Grundlage des SNR-Werts zu ändern.

14. Vorrichtung (200) nach Anspruch 9, wobei
der mindestens eine Prozessor (220) ferner dazu eingerichtet ist, das Kommunikationssignal der mindestens einen der Vorrichtungen auf Grundlage eines in den Informationen bezüglich der Kommunikation enthaltenen SNR-Werts zu steuern.

15. Vorrichtung (200) nach Anspruch 9, wobei
der mindestens eine Prozessor (220) ferner dazu eingerichtet ist, ein Powerline-Kommunikationssignal von mindestens einer der Vorrichtungen durch Erfassen einer Kollision zwischen einem Powerline-Kommunikationssignal jeder der Vorrichtungen und einem Powerline-Kommunikationssignal irgendeiner anderen Vorrichtung, bei der es sich nicht um die Vorrichtungen handelt, zu steuern.

## Revendications

1. Procédé de commande d'un signal de communication d'un système de production d'énergie photovoltaïque, le procédé comprenant:
l'acquisition (310) de données relatives à l'état de communication par la surveillance d'une pluralité de dispositifs faisant partie du système de production d'énergie photovoltaïque;
l'obtention (320) d'informations relatives à la communication de chacun des dispositifs à partir des données acquises; et
la commande (330) d'un signal de communication d'au moins l'un des dispositifs en fonction soit des données acquises, soit des informations relatives à la communication
dans lequel la commande comprend en outre la détermination d'au moins un dispositif présentant un état de communication par courant porteur défectueux sur la base des données acquises; et la commande de l'intensité du signal de communication dudit au moins un dispositif présentant un état de communication par courant porteur défectueux, de manière à amplifier l'intensité du signal de communication.

2. Procédé selon la revendication 1, dans lequel
l'acquisition consiste à acquérir les données relatives à l'état de la communication en surveillant l'état de communication entre les appareils connectés via un système de communication par courant porteur.

3. Procédé selon la revendication 1, dans lequel
l'obtention consiste à obtenir une valeur de rapport signal/bruit (SNR) à partir de l'intensité d'un signal de communication par courant porteur et du niveau de bruit présent dans le signal de communication par courant porteur, qui figurent dans les données acquises.

4. Procédé selon la revendication 1, dans lequel
la commande consiste à réguler le signal de communication de l'au moins un dispositif parmi les dispositifs en fonction de l'intensité d'un signal de communication par courant porteur ou du niveau de bruit présent dans le signal de communication par courant porteur, qui figurent dans les données acquises.

5. Procédé selon la revendication 1, dans lequel
la commande consiste à:
l'obtention d'une valeur SNR à des intervalles de temps prédéfinis, en fonction de l'intensité d'un signal de communication par courant porteur et du niveau de bruit présent dans le signal de communication par courant porteur qui figurent dans les données acquises; et
la modification de l'intensité du signal de communication de l'au moins un dispositif parmi les dispositifs en fonction de la valeur SNR.

6. Procédé selon la revendication 1, dans lequel
la commande consiste à réguler le signal de communication de l'au moins un dispositifs parmi les dispositifs en fonction d'une valeur SNR figurant dans les informations relatives à la communication.

7. Procédé selon la revendication 1, dans lequel
la commande consiste à réguler un signal de communication par courant porteur d'au moins l'un des dispositifs, par détection d'une collision entre un signal de communication par courant porteur de chacun des dispositifs et un signal de communication par courant porteur de tout autre dispositif, autre que lesdits dispositifs.

8. Support d'enregistrement lisible par ordinateur sur lequel est enregistré un programme amenant un ordinateur à exécuter le procédé selon la revendication 1.

9. Appareil (200) permettant de réguler un signal de communication d'un système de production d'énergie photovoltaïque, l'appareil (200) comprenant:
une mémoire (230) stockant au moins un programme; et
au moins un processeur (220) configuré pour exécuter l'au moins un programme,
dans lequel l'au moins un processeur (220) est en outre configuré pour acquérir des données relatives à l'état de communication en surveillant une pluralité de dispositifs intégrés au système de production d'énergie photovoltaïque,
extraire des informations relatives à la communication de chacun des appareils à partir des données acquises, et
réguler un signal de communication d'au moins l'un des dispositifs en fonction soit des données acquises, soit des informations relatives à la communication
dans lequel l'au moins un processeur (220) est en outre configuré pour déterminer au moins un dispositif présentant un état de communication par courant porteur défectueux sur la base des données acquises; et pour réguler l'intensité du signal de communication de l'au moins un dispositif présentant un état de communication par courant porteur défectueux, de manière à amplifier l'intensité dudit signal de communication.

10. Appareil (200) selon la revendication 9, dans lequel
l'au moins un processeur (220) est en outre configuré pour acquérir les données acquises par surveillance de l'état de la communication entre les dispositifs connectés selon un procédé de communication par courant porteur.

11. Appareil (200) selon la revendication 9, dans lequel
l'au moins un processeur (220) est en outre configuré pour calculer une valeur de rapport signal/bruit (SNR) en fonction de l'intensité d'un signal de communication par courant porteur et du niveau de bruit présent dans le signal de communication par courant porteur qui figurent dans les données acquises.

12. Appareil (200) selon la revendication 9, dans lequel
l'au moins un processeur (220) est en outre configuré pour réguler le signal de communication de l'au moins un dispositif en fonction de l'intensité d'un signal de communication par courant porteur ou du niveau de bruit présent dans le signal de communication par courant porteur, qui figurent dans les données acquises.

13. Appareil (200) selon la revendication 9, dans lequel
l'au moins un processeur (220) est en outre configuré pour calculer une valeur SNR à des intervalles de temps prédéfinis, sur la base de l'intensité d'un signal de communication par courant porteur et du niveau de bruit présent dans le signal de communication par courant porteur, qui figurent dans les données acquises, et
modifier l'intensité du signal de communication de l'au moins un des dispositifs en fonction de la valeur SNR.

14. Appareil (200) selon la revendication 9, dans lequel
l'au moins un processeur (220) est en outre configuré pour réguler le signal de communication de l'au moins un dispositif parmi les dispositifs en fonction d'une valeur SNR figurant dans les informations relatives à la communication.

15. Appareil (200) selon la revendication 9, dans lequel
l'au moins un processeur (220) est en outre configuré pour réguler un signal de communication par courant porteur d'au moins l'un des dispositifs en détectant une collision entre un signal de communication par courant porteur de chacun des dispositifs et un signal de communication par courant porteur de tout autre dispositif, autre que lesdits dispositifs.
